# EUROPÄISCHE PATENTSCHRIFT

(11) **EP 2 366 613 B1**
(45) Veröffentlichungstag und Bekanntmachung des Hinweises auf die Patenterteilung: **11.05.2016**
(21) Anmeldenummer: 11001710.0
(22) Anmeldetag: 02.03.2011
(51) Int. Cl.: B62J 7/08, B62J 9/00

(54) **Abstandhalter für Seitentaschen für Motorräder**
Spacer for side bags for motorcycles
Entretoise pour coffres latéraux pour motocyclettes

(30) Priorität: 03.03.2010 DE 202010003118 U
(43) Veröffentlichungstag der Anmeldung: 21.09.2011
(73) Patentinhaber: SW-MOTECH GmbH & Co. KG, 35282 Rauschenberg (DE)
(72) Erfinder: Swora, Jürgen, 35282 Rauschenberg (DE); Rhiel, Fabian, 35274 Kirchhain (DE)
(74) Vertreter: Patentanwälte Olbricht Buchhold Keulertz

(56) Entgegenhaltungen:
- WO-A1-96/20865
- DE-U1- 9 408 781
- DE-U1-202007 004 583
- GB-A- 840 941
- JP-A- 2008 302 835
- US-A1- 2003 122 002
- US-B2- 6 499 638

## Beschreibung

Die Erfindung betrifft einen Abstandhalter für Seitentaschen für Motorräder gemäß dem Oberbegriff von Anspruch 1. Ein derartiger Abstandshalter ist aus US 2003/0122002 bekannt.

Seitentaschen für Motorräder, insbesondere Weichtaschen oder Softtaschen, sind bei Motorradfahrern sehr beliebt. Sie bieten bei kompakten Abmessungen oft ausreichend Stauraum und sorgen dafür, dass auch ein Sozius noch bequem auf dem Motorrad mitfahren kann. Die meist aus Leder oder Stoff gefertigten Taschen sind gewöhnlich über einen oder mehrere Stege miteinander verbunden. Mit diesen werden die Taschen über oder unter die Rückbank, das hintere Schutzblech oder einen Gepäckträger des Motorrades gelegt, so dass zu beiden Seiten des Motorrades jeweils eine Tasche herabhängen kann. Dort werden sie mit Bändern oder Riemen am Rahmen des Motorrades befestigt.

Problematisch hierbei ist, dass sowohl die Taschen als auch die Riemen oder Bänder leicht in das Hinterrad oder in die Antriebskette des Motorrades gelangen können, so dass eine relativ große Unfallgefahr besteht. Dies ist insbesondere dann der Fall, wenn ein Sozius mit auf dem Motorrad sitzt, dessen Beine die Taschen nach innen drücken können. Die Taschen können ferner bei nicht sorgfältiger Befestigung am Hinterrad schleifen und dadurch stark verschmutzen oder gar beschädigt werden.

Man hat daher Abstandhalter für Seitentaschen entwickelt, die seitlich am Motorrad oder - wie in DE 32 43 177 A1 offenbart - seitlich an einem Gepäckträger angeschraubt werden. Der in Form eines Rahmens ausgebildete Abstandhalter gewährleistet eine sichere Befestigung der Seitentaschen und vermeidet einen direkten Kontakt der Tasche mit dem Motorrad. Auf Motorrädern, die den Auspuff unter dem Heck haben, funktioniert der Träger zugleich als Abstandshalter zwischen Weichtasche und Auspuff und vermeidet dadurch unangenehme Schäden.

Um zusätzliche Bohrungen im Rahmen des Motorrades für das Anbringen des Abstandhalters zu vermeiden, schlägt DE 295 02 656 U1 vor, dass ein insgesamt U-förmige Abstandhalter unter Ausnutzung der im Bereich des Hinterrades vorliegenden Befestigungsmittel für andere Bauteile, wie z.B. Stoßdämpfer, Schutzbleche oder Blinker, eingesetzt werden kann, d.h. der Abstandhalter wird jeweils zusammen mit diesen Bauteilen am Motorrad befestigt.

All diese Lösungen haben den Nachteil, dass die Abstandhalter stets fest mit dem Motorrad verschraubt sind, d.h. die Abstandhalter können nur mit geeignetem Werkzeug und mit großem Aufwand von dem Motorrad abgenommen werden. Dies ist jedoch oft unbefriedigend, insbesondere dann, wenn die Seitentaschen und damit auch die Abstandhalter vorübergehend nicht oder nur kurzfristig benötigt werden. Die leeren Abstandhalter bilden dann nur unnötigen Ballast, der sich ungünstig auf das Leergewicht und die Aerodynamik des Motorrades auswirkt. Überdies kann von den freiliegenden Abstandhaltern ein Verletzungsrisiko ausgehen.

Ziel der Erfindung ist es, diese und weitere Nachteile des Standes der Technik zu überwinden und einen Abstandhalter für Seitentaschen für Motorräder zu entwickeln, der mit einfachen Mitteln kostengünstig aufgebaut ist und einen stets ausreichenden Abstand zwischen den Seitentaschen und dem Motorrad gewährleistet. Der Abstandhalter soll zumindest teilweise jederzeit rasch und bequem abnehmbar und wieder anbringbar sein, ohne dass hierfür ein Werkzeug notwendig ist. Er soll ferner eine stets zuverlässige Stütze für die seitlich am Motorrad angeordnete Tasche bilden.

Ein weiteres wichtiges Ziel der Erfindung besteht darin, eine Seitentaschenanordnung zu schaffen, die einfach zu handhaben ist und bei Nichtgebrauch jederzeit vom Motorrad abgenommen werden kann. Überdies soll die Seitentaschenanordnung eine stets zuverlässige Lagefixierung der Taschen gewährleisten.

Hauptmerkmale der Erfindung sind im kennzeichnenden Teil von Anspruch 1 angegeben. Ausgestaltungen sind Gegenstand der Ansprüche 2 bis 9.

Bei einem Abstandhalter für eine Seitentasche, die seitlich an einem Motorrad anbringbar ist, mit einem Halteelement, das in montierter Stellung am Motorrad die Seitentasche in einem definierten Abstand zum Motorrad hält, und mit einem Befestigungselement zum Befestigen des Halteelements an dem Motorrad, sieht die Erfindung vor, dass das Befestigungselement eine Rastvorrichtung ist oder bildet, die das Halteelement lösbar an dem Motorrad festlegt. Dadurch ist es möglich, das Halteelement jederzeit von dem Motorrad abnehmen zu können, was insbesondere dann von Vorteil ist, wenn die Seitentaschen nicht gebraucht werden. An dem Motorrad verbleibt lediglich ein Teil des vormontierten Befestigungselements, was jedoch aufgrund seiner geringen Größe und seines geringen Eigengewichts kaum das Fahrverhalten und die Optik des Motorrades beeinflusst. Die Halteelemente stehen auch nicht mehr leer vom Motorrad ab, so dass keinerlei Verletzungsgefahr besteht.

Das Anbringen und Abnehmen der Halteelemente ist aufgrund der Rastverbindung äußerst einfach und erfolgt ohne jedes Werkzeug, was sich äußerst günstig auf die Handhabung des Abstandhalters auswirkt. Werden die Seitentaschen gebraucht, müssen die Halteelemente lediglich mit den Befestigungselementen verrastet werden. Anschließend können sofort die Taschen auf das Motorrad gelegt und mit den Halteelementen in Eingriff gebracht werden, so dass die Taschen während der Fahrt stets in einem ausreichenden Abstand zum Motorrad gehalten werden.

Die Erfindung sieht weiter vor, dass die Rastvorrichtung einen Aufnahmeteil aufweist, der das Halteelement kraft- und/oder formschlüssig aufnimmt, wobei das Haltelement ein Teil der Rastvorrichtung ist oder bildet. Damit muss das Halteelement bei der Montage lediglich in das bereits am Motorrad vormontierte Aufnahmeteil eingesteckt und verrastet werden. Weitere Handgriffe oder Montagearbeiten sind nicht erforderlich. Das Halteelement ist stets zuverlässig am Motorrad befestigt.

Erfindungsgemäß trägt das Haltelement einen Aufsatz, der ein Teil der Rastvorrichtung ist oder bildet und axial- und drehfest mit dem Halteelement verbunden ist. Der Aufsatz verbindet damit das Halteelement mit dem Aufnahmeteil. Die separate Ausbildung von Halteelement und Aufsatz hat ferner den Vorteil, dass beide aus unterschiedlichen Materialien gefertigt werden können. Beispielsweise kann man für das Halteelement ein stabiles Metallrohr verwenden, während der Aufsatz - ebenso wie der Aufnahmeteil - aus einem Kunststoff gefertigt werden. Erfindungsgemäß weist das Halteelement und/oder der Aufsatz geeignete Rastmittel auf, die kraft- und/oder formschlüssig mit einer Rastvertiefung in dem Aufnahmeteil in Eingriff bringbar sind.

Eine weitere bevorzugte Ausführungsform der Erfindung sieht vor, dass das Rastmittel entgegen einer Federkraft betätigbar ist. Der Aufsatz und/oder das Halteelement können damit selbsttätig in dem Aufnahmeelement einrasten, was die Handhabung des Abstandhalters weiter vereinfacht.

Das Rastmittel ist bevorzugt an einer Federzunge ausgebildet, was sich günstig auf die Herstellkosten auswirkt. Ebenso ist es günstig, wenn das Rastmittel und/oder die Federzunge einstückig mit dem Aufsatz sind. Der Aufsatz kann damit kostengünstig als Spritzgießteil ausgebildet werden.

Ein weiterer wichtiger Aspekt der Erfindung sieht vor, dass eine Seitentaschenanordnung für ein Motorrad eine Seitentasche und einen Abstandhalter aufweist, wobei der Abstandhalter ein Halteelement und ein Befestigungselement vorsieht, welche als Rastvorrichtung ausgebildet ist und das Halteelement lösbar an dem Motorrad festlegt. Das Haltelement hält damit- in montierter Stellung am Motorrad - die Seitentasche stets zuverlässig in einem definierten Abstand zum Motorrad, während das Befestigungselement das Halteelement am Motorrad fixiert, solange die Seitentaschen gebraucht bzw. benutzt werden. Werden die Taschen hingegen nicht gebraucht, können auch die Halteelemente auf beiden Seiten des Motorrades abgenommen werden, so dass am Motorrad lediglich ein Teil der vormontierten Befestigungselemente verbleiben. Montage und Demontage der Halteelemente sind einfach und ohne Werkzeug möglich, so dass die Halteelemente jederzeit auch kurzfristig verwendet und wieder abgenommen werden können. Damit die Seitentaschen stets zuverlässig in einem definierten Abstand zum Motorrad gehalten werden und auch nicht nach außen ausschwenken können, ist an jeder Seitentasche eine Aufnahme für den jeweils zugeordneten Abstandhalter vorgesehen, wobei die Aufnahme einer Tasche jeweils das Halteelement des Abstandhalters aufnimmt.

Darüber hinaus ist zwischen der Seitentasche und dem Halteelement eine Sicherheitseinrichtung ausgebildet, wobei die Sicherheitseinrichtung vorzugweise ein trennbarer Sicherheitsgurt ist. Dieser sorgt dafür, dass die an den Abstandhalten aufgesetzten Taschen nicht versehentlich abrutschen können.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine auseinander gezogene Darstellung eines Abstandhalters für eine Seitentasche mit einem Halteelement und einem Befestigungselement;
Fig. 2 eine Draufsicht auf einen Aufsatz des Befestigungselements;
Fig. 3 eine Stirnansicht des Aufsatzes von Fig. 2;
Fig. 4 eine Stirnansicht eines Aufnahmeteils des Befestigungselements;
Fig. 5 eine Draufsicht auf den Aufnahmeteil von Fig. 4;
Fig. 6 einen Längsschnitt des Befestigungselements, wobei der Aufsatz in den Aufnahmeteil eingesetzt und verrastet ist;
Fig. 7 eine Schrägansicht des Abstandhalters von Fig. 1 in demontierter Position;
Fig. 8 der Abstandhalter von Fig. 1 in montierter Position; und
Fig. 9 eine Seitentaschenanordnung mit einer anderen Ausführungsform eines Abstandhalters.

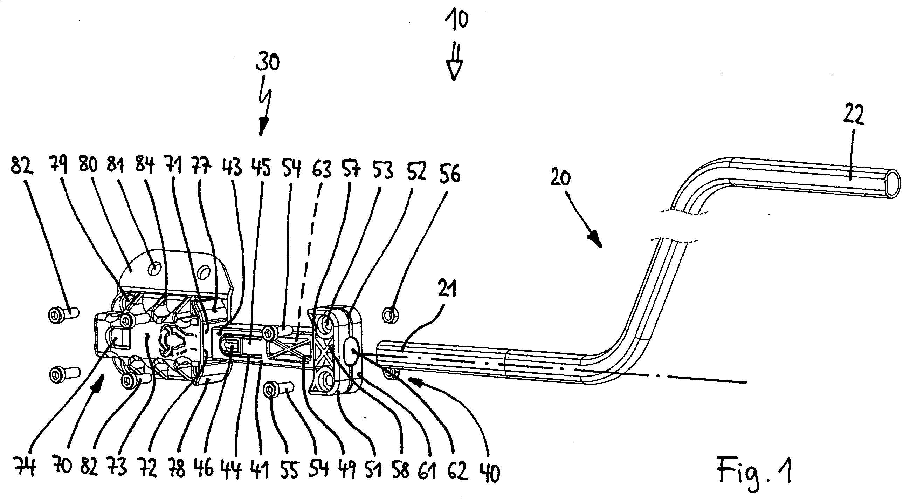

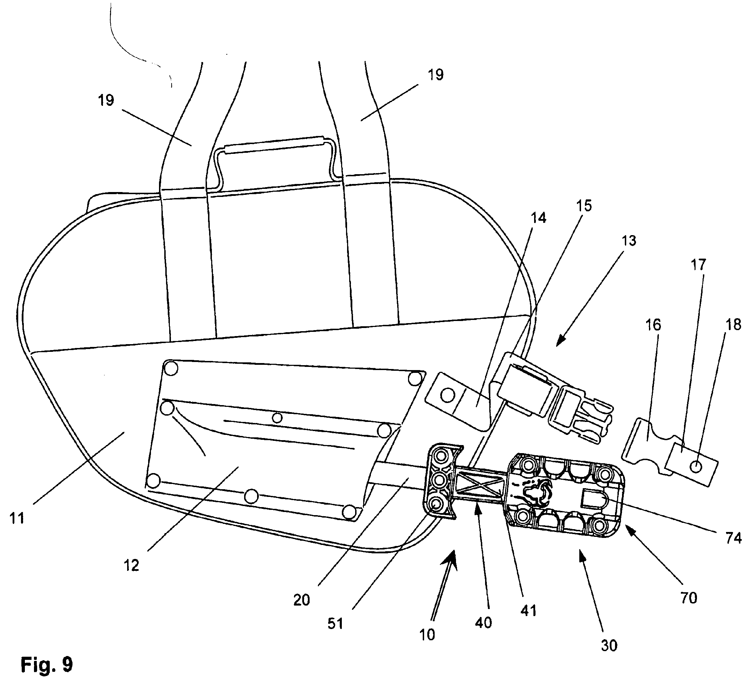

Der in Fig. 1 allgemein mit 10 bezeichnete Abstandhalter hat ein Halteelement 20, das mit einem Befestigungselement 30 am (nicht dargestellten) Rahmen eines (gleichfalls nicht gezeigten) Motorrades befestigt wird. Das Halteelement 20 dient dazu Seiten- oder Satteltaschen 11 (siehe Fig. 9), die seitlich am Motorrad angeordnet werden, auf Abstand zum Motorrad zu halten, damit die Taschen 11 nicht versehentlich in das Hinterrad, die Kette oder andere Bauteile des Motorrades gelangen können, auch dann nicht, wenn das Motorrad in einer Kurve liegt oder wenn ein Sozius auf dem hinteren Teil der Rückbank des Motorrades sitzt und die Taschen 11 belastet.

Die aus Leder oder Stoff gefertigten Taschen 11 sind über Stege 19 miteinander verbunden. Mit diesen werden die Taschen 11 beispielsweise unter die Rückbank des Motorrades gelegt, so dass sie zu beiden Seiten des Motorrades herabhängen können. Dort werden sie von dem Abstandhalter 10 bzw. dessen Halteelemente 20 in Position gehalten.

Das Befestigungselement 30 besitzt zur Festlegung des Halteelements 20 einen Aufsatz 40, der axial- und drehfest mit dem Halteelement 20 verbunden ist und der lösbar mit einem Aufnahmeteil 70 in Eingriff bringbar ist, wobei der Aufnahmeteil 70 den Aufsatz 40 in montierter Position axial- und drehfest fixiert.

Der Aufnahmeteil 70 ist mittels einer Montageplatte 80 am Rahmen des Motorrades befestigt. Die Montageplatte 80 weist hierzu Bohrungen 81 auf, in die geeignete (nicht dargestellte) Befestigungsschrauben eingesetzt werden. Letztere können direkt mit dem Rahmen des Motorrades verschraubt werden, wobei an geeigneter Stelle Gewindebohrungen oder Gewindeeinsätze vorgesehen sind.

Man kann die Montageplatte 80 aber auch im Bereich bereits vorhandener Bauteile anordnen und deren Befestigungsschrauben für die Festlegung der Montageplatte 80 mitnutzen. Geeignete Bauteile sind beispielsweise die hinteren Fußrasten des Motorrades. In diesem Fall wird die Anordnung der Bohrungen 81 auf die Lage der Schrauben zum Festlegen der Fußrasten abgestimmt. Dies hat den Vorteil, dass keine zusätzlichen Bohrungen im Rahmen notwendig sind.

Je nach den räumlichen Verhältnissen am Motorrad ist die Montageplatte 80 als ebene Platte ausgebildet oder - wie in Fig. 1 dargestellt - leicht abgekröpft, damit der Aufnahmeteil 70 und damit das Halteelement 20 in einem geeigneten Winkel zum Motorrad liegen.

Die Befestigung des Aufnahmeteils 70 an der Montageplatte 80 erfolgt mittels Schrauben 82, die Bohrungen 79 im Aufnahmeteil 70 durchgreifen und mit korrespondierenden (nicht sichtbaren) Gewindebohrungen in der Montageplatte 80 verschraubt werden. Letztere kann aber auch mit Durchgangsbohrungen versehen sein, während die Schrauben 82 mittels (nicht gezeigter) Muttern verschraubt werden.

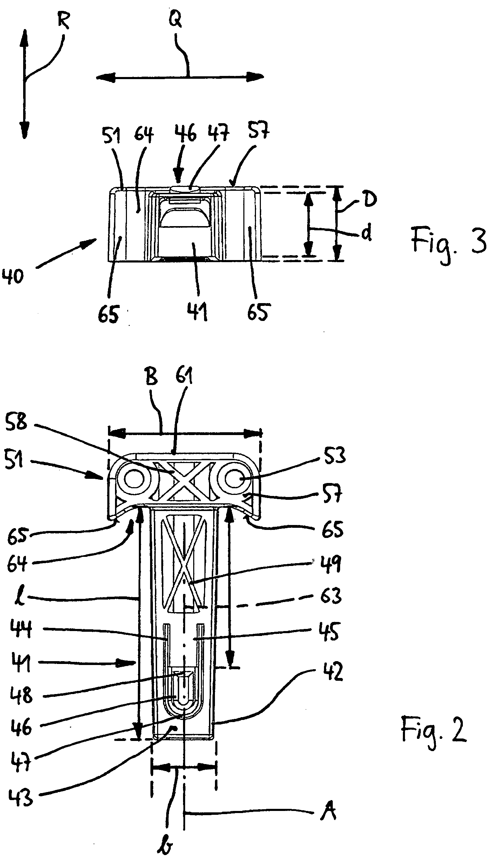

Das Halteelement 20 ist vorzugsweise ein Rohr mit rundem oder eckigem Querschnitt, das an einem Ende 21 den Aufsatz 40 trägt. Dieser ist vorzugsweise aus einem Kunststoffmaterial gefertigt und - wie die Fig. 1 und 2 zeigen - mit einem Schaftteil 41 und einem Kopfteil 51 insgesamt T-förmig aufgebildet.

Der Schaftteil 41 erstreckt sich in Längsrichtung A des Haltelements 20. Er hat einen unrunden, vorzugsweise eckigen Querschnitt und ist bevorzugt einstückig mit dem Kopfteil 51. Dieser erstreckt sich in einer Richtung Q quer zur Längsrichtung A des Halteelements 20 und ist in Querrichtung Q über seine gesamte Breite B mit einem Schlitz 52 versehen, der den Kopfteil 51 in zwei (nicht näher bezeichnete) Hälften teilt. Der Aufsatz 40 ist damit einseitig geschlitzt ausgebildet, wobei die weiterhin über den Schaftteil 41 miteinander verbundenen Hälften des Kopfteils 51 federelastisch gegeneinander verschwenkbar sind.

Seitlich in den Kopfteil 51 eingebrachte Bohrungen 53 dienen der Aufnahme von Schrauben 54, die mittels Muttern 56 in dem Kopfteil 51 gesichert werden. Die Bohrungen 53 sind im Durchmesser endseitig vergrößert ausgebildet, um auf der einen Seite des Kopfteils 51 die Köpfe 55 der Schrauben 54 und auf der anderen Seite des Kopfteils 51 die Muttern 56 aufnehmen zu können. Letztere sind zudem formschlüssig in die Enden der Bohrungen 53 eingesetzt, damit sich die Muttern 56 beim Eindrehen der Schrauben 54 nicht drehen können. Sowohl die Schraubenköpfe 55 als auch die Muttern 56 stehen nicht über die Seitenflächen 57 des Kopfteils 51 hinaus. In diesen eingearbeitete Kreuzstreben 58 verstärken den Kopfteil 46, so dass dieser bei relativ geringem Gewicht eine ausreichende Stabilität aufweist und sich nicht verwinden kann.

Wie die Fig. 2 und 3 näher zeigen, ist die Breite B des Kopfteils 51 deutlich größer als die Breite b des Schaftteils 41, so dass der Aufsatz 40 eine insgesamt T-förmige Gestalt aufweist. Die Dicke D des Kopfteils 51 hingegen ist nur geringfügig größer als die Dicke d Schaftteils 41, so dass der Aufsatz 40 in einer Richtung R quer zur Längsrichtung A des Halteelements 20 und quer zur Querrichtung Q relativ flach ausgebildet ist.

In der dem Halteelement 20 zugewandten Stirnseite 61 des Kopfteils 51 ist eine Öffnung 62 eingebracht, deren Kontur im Wesentlichen der Außenkontur des Halteelements 20 entspricht. Die dem Schaftteil 41 zugewandte Stirnseite 64 des Kopfteils 51 ist in Querrichtung Q seitlich abgewinkelt ausgebildet, wobei an den Außenenden Schrägflächen 65 vorgesehen sind.

Die Öffnung 62 im Kopfteil 51 begrenzt einen Aufnahmekanal 63, der sich durch den Kopfteil 61 hindurch bis in den Schaftteil 41 hinein erstreckt. Der Aufnahmekanal 63 dient zur Aufnahme des Halteelements 20, das mit seinem Ende 21 in den Aufnahmekanal 63 und damit in den Aufsatz 40 eingesteckt wird.

Sitzt das Halteelement 20 mit seinem Ende 21 in dem Aufsatz 40, werden die Schrauben 54 gegen die Muttern 56 fest angezogen. Dadurch werden die von dem Schlitz 52 geteilten Hälften des Kopfteils 51 beidseitig gegen das Haltelement 20 gepresst, welches dauerhaft sicher in dem Aufsatz 40 festgelegt ist.

Anstelle einer solchen Klemmverbindung können auch andere Befestigungsarten gewählt werden. So kann der Aufsatz 40 beispielsweise fest auf das Ende 21 des Halteelements 20 aufgepresst werden, wobei die Innenabmessungen des Aufnahmekanals 63 geringfügig kleiner gewählt werden als die Außenabmessungen des Halteelements 20, so dass dieser reibschlüssig in dem Aufsatz 40 festgelegt ist. Man kann den Aufsatz 40 aber auch zusätzlich oder alternativ auf das Ende 21 des Halteelements 20 aufkleben oder mit diesem vernieten.

Weil die Kontur der Öffnung 62 der Außenkontur des Halteelements 20 entspricht, ist letzteres - wenn das Halteelement 20 einen unrunden Querschnitt aufweist - nicht nur axial, sondern auch gegen Verdrehen gesichert. Sollten das Halteelement 20, die Öffnung 62 und der Aufnahmekanal 63 einen runden Querschnitt aufweisen, dann ist zwischen diesem und dem Aufsatz 40 eine (nicht gezeigte) Verdrehsicherung ausgebildet.

An seinem dem Kopfteil 51 gegenüber liegenden Ende 42 ist in einer Seitenfläche 43 des Schaftteils 41 ein U-förmiger Schlitz 44 eingebracht, der dadurch eine Zunge 45 begrenzt, die sich in Längsrichtung A erstreckt. Die Zunge 45 ist aufgrund der elastischen Eigenschaften des Kunststoffmaterials, aus dem der Aufsatz 40 gefertigt ist, federelastisch ausgebildet. Sie trägt endseitig eine Erhebung 46, die als Rastelement dient und die an ihrem dem Kopfteil 51 abgewandten Ende eine Anlaufschräge oder Rundung 47 und an ihrem dem Kopfteil 51 zugewandten Ende eine relativ steile Flanke 48 aufweist. Wie Fig. 2 zeigt, ist die Außenkontur der Erhebung 46 im Bereich der Anlaufschräge 47 rund und im Bereich der Flanke 48 gerade ausgebildet.

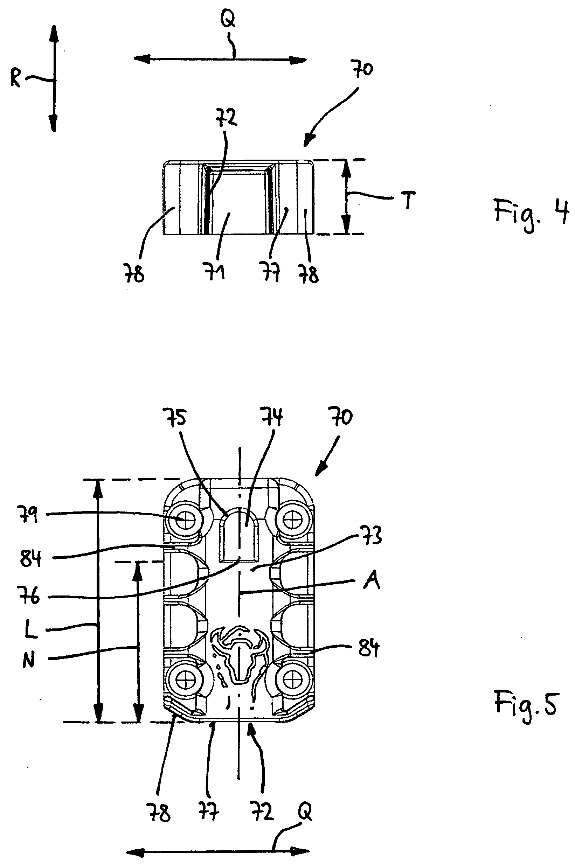

In der Seitenfläche 43 des Schaftteils 41 eingearbeitete Kreuzstreben 49 stabilisieren den Schaft 41 und damit den Aufsatz 40, so dass sich dieser beim bestimmungsgemäßen Gebrauch des Abstandhalters 10 nicht verwinden kann.
Der Aufnahmeteil 70 des Befestigungselements 30 weist stirnseitig etwa mittig eine Aufnahmeöffnung 72 auf, welche einen weiteren Aufnahmekanal 71 begrenzt (siehe Fig. 4 und 5). Dieser erstreckt sich in Längsrichtung A und über nahezu die gesamte Länge L des Aufnahmeteils 70, wobei die Länge L größer ist als die Länge I des Schaftteils 41. Dessen Querschnitt entspricht im Wesentlichen dem Querschnitt des weiteren Aufnahmekanals 71, so dass letzterer den Aufsatz 40 des Halteelements 20 im Wesentlichen formschlüssig und drehfest aufnimmt. Die Innenabmessungen des weiteren Aufnahmekanals 71 sind ferner geringfügig größer als die Außenabmessungen des Schaftteils 41, so dass dieser mit geringem Bewegungsspiel in dem Aufnahmekanal 71 geführt ist. Um das Einführen des Aufsatzes 40 in den Aufnahmeteil 70 weiter zu erleichtern, kann der Schaft 41 zudem leicht konisch ausgebildet sein (siehe Fig. 2).

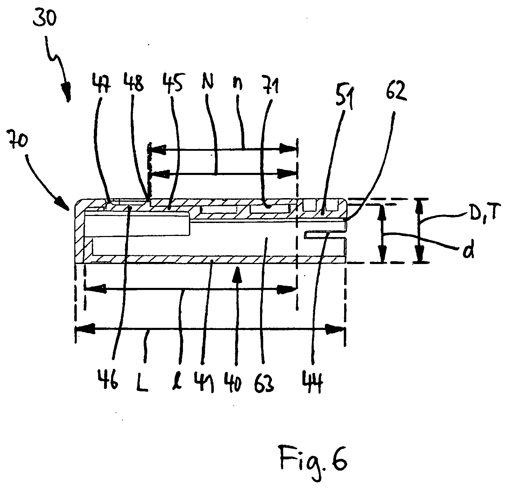

In einer Seitenfläche 73 des Aufnahmeteils 70 ist eine Ausnehmung 74 eingebracht, deren Kontur im Wesentlichen der Außenkontur der Erhebung 46 des Aufsatzes 40 entspricht, so dass die an der Federzunge 45 ausgebildete Erhebung 46 im Wesentlichen formschlüssig von der Ausnehmung 74 aufgenommen werden kann. Wie Fig. 5 zeigt, weist die Kontur der Ausnehmung 74 in ihrem der Aufnahmeöffnung 72 abgewandten Bereich eine runde Kante 75 und in ihrem der Aufnahmeöffnung 72 zugewandten Bereich eine gerade Kante 76 auf, wobei sich letztere etwa senkrecht zur Längsrichtung A und mithin in Querrichtung Q erstreckt. Der Abstand N der Kante 76 von der Aufnahmeöffnung 72 ist geringfügig kleiner als der Abstand n zwischen der Flanke 48 der Erhebung 46 und der Stirnseite 64 des Kopfteils 51 (siehe dazu auch Fig. 6).

Die Stirnfläche 77 des Aufnahmeteils 70 ist im Bereich der Aufnahmeöffnung 72 in Querrichtung Q eben ausgebildet. In den Randbereichen hingegen sind Schrägflächen 78 vorgesehen, deren Anstellwinkel den Anstellwinkeln der Schrägflächen 65 des Kopfteils 51 entspricht, so dass die Stirnfläche 77 des Aufnahmeteils 70 und die Stirnseite 64 des Kopfteils 51 im Wesentlichen formgleich ausgebildet sind. Die Dicke T des Aufnahmeteils 70 entspricht der Dicke D des Kopfteils 51, so dass der Aufnahmeteil 70 nicht höher ist als der Aufsatz 40.

Seitlich an dem Aufnahmeteil 70 ausgebildete Stützen oder Rippen 84 erhöhen die Stabilität der Befestigungsvorrichtung 30 bei gleichzeitig geringem Eigengewicht.

Die Montage und Demontage des erfindungsgemäßen Abstandhalters 10 ist äußerst einfach, ebenso dessen Handhabung.

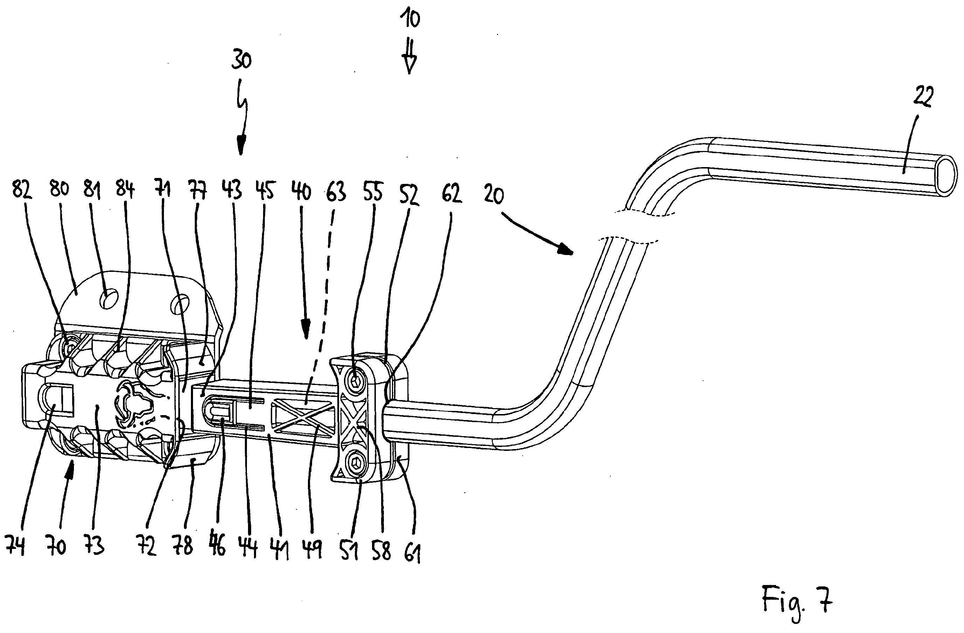

Der Aufnahmeteil 70 wird mit Hilfe der Montageplatte 80 am Rahmen des Motorrades befestigt, während der Aufsatz 40 auf das Ende 21 des Halteelements 20 aufgesteckt und mittels der Schrauben 54 und Muttern 56 gesichert wird (siehe Fig. 7).

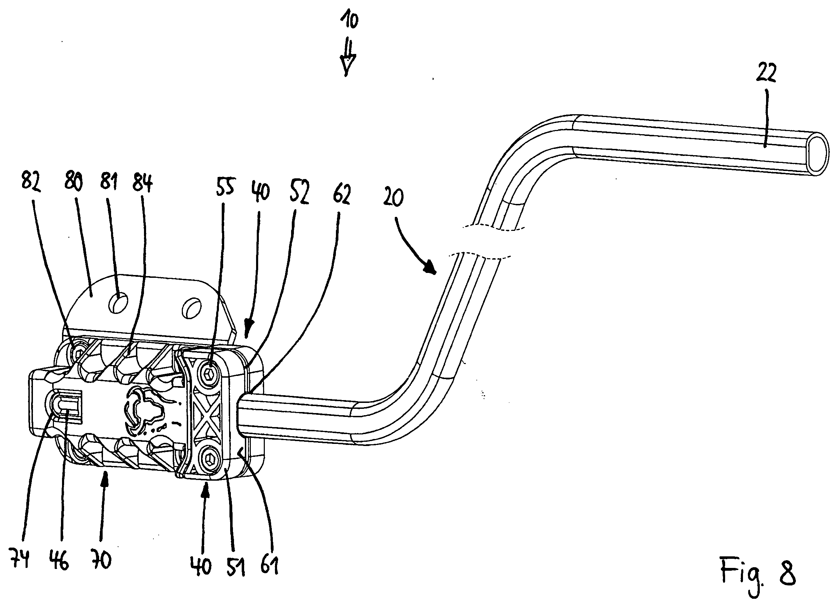

Sobald der Aufnahmeteil 70 am Motorrad fixiert ist, führt man den Aufsatz 40 des Halteelements 20 mit dem Schaftteil 41 durch die Aufnahmeöffnung 72 hindurch in den Aufnahmekanal 71 ein. Dadurch wird die Rasterhebung 46 von der Anlaufschräge 47 und dem Rand der Aufnahmeöffnung 72 entgegen der Federkraft der Zunge 45 in Richtung R quer zur Längsrichtung A und quer zur Querrichtung Q in den Schaftteil 41 hinein gedrückt. Der Aufsatz 40 kann nun ungehindert in den Aufnahmeteil 70 eingesteckt werden, bis der Kopfteil 51 - wie in Fig. 8 gezeigt - mit seiner Stirnseite 64 an der formgleichen Stirnfläche 77 des Aufnahmeteils 70 anschlägt. In dieser Stellung gelangt die Erhebung 46 unter die Ausnehmung 74 in der Seitenfläche 73 des Aufnahmeteils 70 und die Federzunge 45 drückt die nun freiliegende Erhebung 46 in die formgleiche Ausnehmung 74 hinein, wobei sich die steile Flanke 48 an die gerade Kante 76 der Ausnehmung 74 anlegt.

Weil der Abstand N der Kante 76 zur Aufnahmeöffnung 72 kleiner ist als der Abstand n der Flanke 48 zur Stirnseite 64 des Kopfteils 51, wird der Aufsatz 40 von der Flanke 48 stets in den Aufnahmekanal 71 und damit in den Aufnahmeteil 70 hineingezogen. Da jedoch der Kopfteil 51 mit seiner Stirnseite 64 an der formgleichen Stirnfläche 77 des Aufnahmeteils 70 anschlägt, wird der Aufsatz 40 automatisch zentriert ausgerichtet. Dieser ist stets spielfrei in dem Aufnahmeteil 70 gehalten, so dass auch das Halteelement 20 stets präzise positioniert bleibt, auch wenn äußere Kräfte auf die Halteelement 20 einwirken.

Zum Abnehmen des Halteelements 20 vom Motorrad wird die Erhebung 46 einfach in den Schaftteil 41 des Aufsatzes 40 hinein und aus der formgleichen Ausnehmung 74 herausgedrückt, bis die gerade Kante 76 der Ausnehmung 74 des Aufnahmeelements 70 die Flanke 48 der Erhebung 46 freigibt. Das Halteelement 20 kann nun mit seinem Aufsatz 40 aus dem Aufnahmekanal 71 des Aufnahmeelements 70 herausgezogen werden.

Man erkennt, dass der Aufsatz 40 und der Aufnahmeteil 70 des Befestigungselements 30 eine Rastvorrichtung bilden, die das Halteelement 20 kraft- und/oder formschlüssig am Motorrad fixiert. Das Halteelement 20 wird mithin stets zuverlässig von dem Befestigungselement 30 gehalten, wobei sowohl die Montage als auch die Demontage - ohne jedes Werkzeug - rasch und bequem vorgenommen werden können.

Wird der Abstandhalter 10 und damit das Haltelement 20 nicht benötigt, weil keine Seiten- oder Satteltaschen 11 verwendet werden, kann das Haltelement 20 über den Aufsatz 40 rasch wieder von dem Aufnahmeteil 70 und damit von dem Motorrad gelöst werden. Hierzu muss lediglich die Erhebung 46 entgegen der Federkraft der Zunge 45 in die Ausnehmung 74 des Aufnahmeteils 70 hinein gedrückt werden, bis der Aufsatz 40 mit seinem Schaft- und Kopfteil 41, 51 aus dem Aufnahmekanal 71 herausgezogen werden kann.

Von dem Abstandhalter 10 verbleibt am Motorrad lediglich der Aufnahmeteil 70 und die Montageplatte 80, die jedoch aufgrund ihrer relativ geringen Größe und ihrem relativ geringen Gewicht, die Fahreigenschaften des Motorrades kaum stören. Auch die Verletzungsgefahr ist denkbar gering, weil weder der Aufnahmeteil 70 noch die Montageplatte 80 abstehenden oder vorstehenden Elemente aufweisen.

Das Halteelement 20 kann - wie die Fig. 1, 7 und 8 zeigen - ein- oder mehrfach abgewinkelt sein, um beispielsweise mit dem Halteelement 20 der Kontur des Rahmens oder dem Design des Motorrades zu folgen. Man kann das Haltelement 20 aber auch - wie Fig. 9 zeigt - als gerades Rohr oder als geraden Stab ausbilden.

Wie Fig. 9 weiter zeigt, wird das dem Aufsatz 40 gegenüberliegende freie Ende 22 des Haltelements 20 mit der Tasche 11 verbunden. Letztere ist hierzu rückseitig mit einer Aufnahme 12 versehen, welche das freie Ende 22 des Halteelements 20 aufnimmt. Die Aufnahme 12 kann als Aufnahmekanal oder Ärmel ausgebildet sein, der rückseitig auf der Satteltasche 11 aufgenäht ist. Denkbar ist auch die Verwendung von (nicht dargestellten) Bändern, die einzelne Schlaufen für die Aufnahme des Halteelements 20 bilden. Wichtig hierbei ist, dass die Aufnahme 12 die Seiten- bzw. Satteltasche 11 in Richtung R quer zur Längsrichtung A und quer zur Querrichtung Q sichert, damit die Tasche 11 nicht ins schaukeln gerät oder in Kurvenfahrten vom Motorrad wegschwenken kann.

Damit das Halteelement 20 nicht versehentlich in Längsrichtung A aus der Aufnahme 12 herausrutschen und die Satteltasche 11 mithin nicht versehentlich von dem Halteelement 20 abrutschen kann, ist eine Sicherheitseinrichtung 13 vorgesehen. Diese besteht in der Ausführungsform der Fig. 9 aus einem Sicherheitsgurt 14, der einen ersten Gurtabschnitt 15 und einen zweiten Gurtabschnitt 17 aufweist. Der erste Gurtabschnitt 15 ist seitlich an der Tasche 12 befestigt, während der zweite Gurtabschnitt 17 an dem Halteelement 20 fixiert ist, beispielsweise mit einem Niet 18. Beide Gurtabschnitte 15, 17 werden mittels einer Schnalle 16 lösbar miteinander verbunden. Die Schnalle 16 kann eine Riemenschnalle, (wie dargestellt) eine Klick-Schnalle oder eine Klemmschnalle sein. Man kann aber auch einen Klettverbinder, eine Rollschnalle, einen Karabinerhaken u.dgl. verwenden.

Man erkennt, dass der Abstandhalter 10 und die Seitentaschen 11 erfindungsgemäß eine Seitentaschenanordnung bilden, die eine dauerhaft zuverlässige Festlegung der Taschen 11 seitlich am Motorrad gewährleistet und zudem einfach zu handhaben ist, indem sowohl die Taschen 11 als auch das Halteelement 20 des Abstandhalters 10 jederzeit rasch und bequem vom Motorrad abgenommen werden können, sollten diese nicht gebraucht werden. Am Motorrad verbleiben lediglich das Aufnahmeteil 70 und die Monateplatte 80, die mittels Schrauben stets fest am Rahmen des Motorrades fixiert sind. Zum Montieren der Seitentaschenanordnung werden zunächst zu beiden Seiten des Rahmens die Halteelemente 20 mit ihren Aufsätzen 40 in die Aufnahmeelemente 70 eingesteckt und verrastet (in Fig. 9 ist der Aufsatz 40 bereits in das Aufnahmeteil 70 eingeführt, aber noch nicht verrastet). Anschließend werden die Taschen 11 auf das Motorrad aufgelegt und mit den Aufnahmen 12 auf die rohrförmigen Halteelemente 20 aufgesteckt. Ferner werden die Sicherheitsgurte 14 geschlossen, damit die Taschen nicht versehentlich von den Halteelementen 20 abrutschen können.

Die Demontage der Seitentaschenanordnung erfolgt in umgekehrter Reihenfolge.

Die Erfindung ist nicht auf eine der vorbeschriebenen Ausführungsformen beschränkt, sondern in vielfältiger Weise abwandelbar.

Die an bzw. auf der Federzunge 45 ausgebildete Rasterhebung 46 ist zentrisch mit einer (nicht näher bezeichneten) Mulde versehen. Die Erhebung 46 kann aber auch konvex oder gewölbt ausgebildet sein. Ferner können die Erhebung 46 und die korrespondierende Rastausnehmung 74 in der Seitenfläche 73 des Aufnahmeteils 70 eine Kontur aufweisen, die rund oder eckig ausgebildet ist.

Die Rastverbindung des Befestigungselements 30 kann anstelle der Erhebung 46 und der korrespondierenden Ausnehmung 74 eine Kugelrast aufweisen, wobei z.B. in dem Schaftteil federnd gelagerte Rastkugeln mit korrespondierenden Rastvertiefungen im Aufnahmeteil 70 in Eingriff gelangen.
Man kann den Aufsatz 40 aber auch wegfallen lassen und einstückig mit dem Halteelement 20 ausbilden. In diesem Fall wären die Rastkugeln bzw. die Rastelemente direkt in dem Halteelement 20 integriert.

Das Rohrmaterial des Halteelements 20 ist im Querschnitt entweder eckig oder rund, wobei ein rundes Profil an wenigstens einer Seite flachgepresst wird.

Die Rastverbindung des Befestigungselements 30 muss kein federbelastetes Rastelement 46 aufweisen. Man kann auch mechanisch, magnetisch oder elektrisch betätigbare oder wirkende Rast- oder Riegelelemente verwenden, die seitlich oder stirnseitig in den Aufnahmeteil und/oder den Aufsatz eingreifen, um das Halteelement 20 während des Gebrauchs der Seitentaschen 11 an dem Aufnahmeteil 70 des Befestigungselements 30 zu fixieren. Die Rast- oder Riegelelemente können ferner eine Schnellverbindung bilden.

Man erkennt jedoch, dass ein Abstandhalter 10 für eine Seitentasche 11, die seitlich an einem Motorrad anbringbar ist, ein Halteelement 20 und ein Befestigungselement 30 für das Halteelement 20 aufweist. Letzteres ist derart ausgebildet, dass es in montierter Stellung am Motorrad die Seitentasche 11 in einem definierten Abstand zum Motorrad hält, während das Befestigungselement 30 eine Rastvorrichtung ist oder bildet, welche das Halteelement 20 lösbar am Motorrad festlegt. Die Rastvorrichtung 30 hat bevorzugt einen Aufnahmeteil 70, der das Halteelement 20 kraft- und/oder formschlüssig aufnimmt. Dieses trägt endseitig einen Aufsatz 40, der axial- und drehfest mit dem Halteelement 20 verbunden ist und einen Teil der Rastvorrichtung 30 ist oder bildet. Hierzu ist zwischen dem Aufsatz 40 und dem Aufnahmeteil 70 ein federbelastetes Rastmittel 46 vorgesehen, das in montierter Stellung des Halteelements 20 kraft- und/oder formschlüssig mit einer Rastvertiefung 74 in dem Aufnahmeteil 70 in Eingriff bringbar ist. Das Rastmittel 46 ist bevorzugt an einer Federzunge 45 ausgebildet ist, die einstückig mit dem Aufsatz 40 ist.

Eine erfindungsgemäße Seitentaschenanordnung für ein Motorrad umfasst eine Seitentasche 11, die seitlich an einem Motorrad anbringbar ist, und einen Abstandhalter 10, mit einem Halteelement 20, das in montierter Stellung am Motorrad die Seitentasche 11 in einem definierten Abstand zum Motorrad hält, und mit einem Befestigungselement 30 zum Befestigen des Halteelements 20 an dem Motorrad, wobei das Befestigungselement 30 eine Rastvorrichtung ist oder bildet, die das Halteelement 20 lösbar an dem Motorrad festlegt. Die Seitentasche 11 weist eine Aufnahme 12 für den Abstandhalter 10 aufweist, wobei die Aufnahme 12 das Halteelement 20 des Abstandhalters 10 aufnimmt. Um die Sicherheit weiter zu erhöhen, ist zwischen der Seitentasche 11 und dem Halteelement 20 eine Sicherheitseinrichtung 13 ausgebildet, beispielsweise in Form eines trennbaren Sicherheitsgurts 14 ist.

Sowohl die Montage als auch die Demontage der Seitentaschenanordnung ist mithin äußerst rasch und ohne jedes Werkzeug durchzuführen. Sowohl die Seitentasche 11 als auch das Haltelement 20 als Bestandteile der Seitentaschenanordnung können mithin jederzeit an dem Motorrad montiert und ebenso rasch wieder demontiert werden. Sollten daher die Seitentaschen 11 nicht benötigt werden kann man nicht nur die Seitentaschen 11 von dem Motorrad abnehmen, sondern zugleich auch den Halter 20. Am Motorrad verbleiben lediglich der Aufnahmeteil 70 und die unter den Fußrasten montierte Montageplatte 80, was jedoch weder optisch stört noch das Gewicht des Motorrades spürbar beeinflusst. Die Verletzungsgefahr ist äußerst gering, weil die Bauteile 70, 80 der Rastvorrichtung 30 nicht mehr freiliegend an dem Motorrad verbleiben.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| A | Längsrichtung | 45 | Zunge |
| B | Breite (Kopfteil) | 46 | Erhebung |
| b | Breite (Schaftteil) | 47 | Anlaufschräge/Rundung |
| D | Dicke (Kopfteil) | 48 | Flanke |
| d | Dicke (Schaftteil) | 49 | Kreuzstrebe |
| L | Länge (Aufnahmeteil) | 51 | Kopfteil |
| I | Länge (Schaftteil) | 52 | Schlitz |
| N | Abstand | 53 | Bohrung |
| n | Abstand | 54 | Schraube |
| Q | Querrichtung | 55 | Schraubenkopf |
| R | Richtung | 56 | Mutter |
| T | Dicke (Aufnahmeteil) | 57 | Seitenfläche |
| | | 58 | Kreuzstrebe |
| 10 | Abstandhalter | 61 | Stirnseite |
| 11 | Seiten-/Satteltaschen | 62 | Öffnung |
| 12 | Aufnahme | 63 | Aufnahmekanal |
| 13 | Sicherheitseinrichtung | 64 | Stirnseite |
| 14 | Sicherheitsgurt | 65 | Schrägfläche |
| 15 | erster Gurtabschnitt | | |
| 16 | Schnalle | 70 | Aufnahmeteil |
| 17 | zweiter Gurtabschnitt | 71 | Aufnahmekanal |
| 18 | Niet | 72 | Aufnahmeöffnung |
| 19 | Steg | 73 | Seitenfläche |
| 20 | Halteelement | 74 | Ausnehmung |
| 21 | Ende | 75 | runde Kante |
| 22 | freies Ende | 76 | gerade Kante |
| 30 | Befestigungselement | 77 | Stirnfläche |
| | | 78 | Schrägfläche |
| 40 | Aufsatz | 79 | Bohrung |
| 41 | Schaftteil | 80 | Montageplatte |
| 42 | Ende | 81 | Bohrung |
| 43 | Seitenfläche | 82 | Schraube |
| 44 | Schlitz | 84 | Stützen/Rippen |

## Patentansprüche

1. Abstandhalter (10) für eine Seitentasche (11), die seitlich an einem Motorrad anbringbar ist, mit einem Halteelement (20), das in montierter Stellung am Motorrad die Seitentasche (11) in einem definierten Abstand zum Motorrad hält, und mit einem Befestigungselement (30) zum Befestigen des Halteelements (20) an dem Motorrad, wobei das Befestigungselement (30) eine Rastvorrichtung ist oder bildet, die das Halteelement (20) lösbar an dem Motorrad festlegt, **dadurch gekennzeichnet,**
a) **dass** die Rastvorrichtung (30) einen Aufnahmeteil (70) aufweist, der das Halteelement (20) kraft- und/oder formschlüssig aufnimmt,
b) das Haltelement (20) ein Teil der Rastvorrichtung (30) ist oder bildet,
c) **dass** das Haltelement (20) einen Aufsatz (40) trägt, der ein Teil der Rastvorrichtung (30) ist oder bildet,
d) **dass** der Aufsatz (40) axial- und drehfest mit dem Halteelement (20) verbunden ist, und
e) **dass** das Haltelement (20) und/oder der Aufsatz (40) ein Rastmittel (46) aufweist, das kraft- und/oder formschlüssig mit einer Rastvertiefung (74) in dem Aufnahmeteil (70) in Eingriff bringbar ist.

2. Abstandhalter nach Anspruch 1, **dadurch gekennzeichnet, dass** das Rastmittel (46) entgegen einer Federkraft betätigbar ist.

3. Abstandhalter nach Anspruch 1 oder 2, **dadurch gekennzeichnet, dass** das Rastmittel (46) an einer Federzunge (45) ausgebildet ist.

4. Abstandhalter nach einem der Ansprüche 1 bis 3, **dadurch gekennzeichnet, dass** das Rastmittel (46) und/oder die Federzunge (45) einstückig mit dem Aufsatz (40) sind.

5. Seitentaschenanordnung für ein Motorrad, mit einer Seitentasche (11) und mit einem Abstandhalter (10) nach wenigstens einem der Ansprüche 1 bis 4.

6. Seitentaschenanordnung nach Anspruch 5, **dadurch gekennzeichnet, dass** die Seitentasche (11) eine Aufnahme (12) für den Abstandhalter (10) aufweist.

7. Seitentaschenanordnung nach Anspruch 5 oder 6, **dadurch gekennzeichnet, dass** die Aufnahme (12) das Halteelement (20) des Abstandhalters (10) aufnimmt.

8. Seitentaschenanordnung nach einem der Ansprüche 5 bis 7, **dadurch gekennzeichnet, dass** zwischen der Seitentasche (11) und dem Halteelement (20) eine Sicherheitseinrichtung (13) ausgebildet ist.

9. Seitentaschenanordnung nach Anspruch 8, **dadurch gekennzeichnet, dass** die Sicherheitseinrichtung (13) ein trennbarer Sicherheitsgurt (14) ist.

## Claims

1. Spacer (10) for a side pocket (11) that is mountable on the side of a motorcycle, with a holding element (20) which holds the side pocket (11) in the mounted position on the motorcycle at a defined distance from the motorcycle, and with a fastening element (30) for securing the holding element (20) to the motorcycle, wherein the fastening element (30) is, or forms, a latching device which allows the removably attachment of the holding element (20) to the motorcycle, **characterised in that**
a) the latching device (30) comprises a receiving part (70), which holds the holding element (20) through force and/or form fitting,
b) the holding element (20) is, or forms, part of the latching device (30),
c) the holding element (20) carries an attachment (40), which is, or forms, a part of the latching device (30),
d) the attachment (40) is axially and rotationally fixed to the holding element (20), and
e) the holding element (20) and/or the attachment (40) comprises a latching means (46), which can be engaged with a locking recess (74) in the receiving part (70) through force and/or form fitting.

2. Spacer according to claim 1, **characterised in that** the latching means (46) is actuatable against a spring force.

3. Spacer according to claim 1 or 2, **characterised in that** the latching means (46) is formed on a spring tongue (45).

4. Spacer according to one of the claims 1 to 3, **characterised in that** the latching means (46) and/or the spring tongue (45) are integral with the attachment (40).

5. Side pocket assembly for a motorcycle with a side pocket (11) and with a spacer (10) according to at least one of the claims 1 to 4.

6. Side pocket assembly according to claim 5, **characterised in that** the side pocket (11) has a receptacle (12) for the spacer (10).

7. Side pocket assembly according to claim 5 or 6, **characterised in that** the receptacle (12) receives the holding element (20) of the spacer (10).

8. Side pocket assembly according to any of the claims 5 to 7, **characterised in that** a safety device (13) is formed between the side pocket (11) and the holding element (20).

9. Side pocket assembly according to claim 8, **characterised in that** the safety device (13) is a releasable seat belt (14).

## Revendications

1. Entretoise (10) pour un coffre latéral (11) qui peut être placé latéralement sur une motocyclette, avec un élément de maintien (20) qui, à l'état monté sur la motocyclette, maintient le coffre latéral (11) à une distance définie de la motocyclette et avec un élément de fixation (30) qui est destiné à fixer l'élément de maintien (20) à la motocyclette, l'élément de fixation (30) étant ou formant un dispositif d'enclenchement qui fixe l'élément de maintien (20) à la motocyclette de manière amovible, **caractérisée en ce que**
a) le dispositif d'enclenchement (30) comporte une partie de logement (70) qui loge l'élément de maintien (20) par adhérence et/ou par concordance de forme,
b) l'élément de maintien (20) est ou forme une partie du dispositif d'enclenchement (30),
c) l'élément de maintien (20) porte une pièce rapportée (40) qui est ou forme une partie du dispositif d'enclenchement (30),
d) la pièce rapportée (40) est assemblée à l'élément de maintien (20) de manière fixe sur l'axe et solidaire en rotation et
e) l'élément de maintien (20) et/ou la pièce rapportée (40) comporte un moyen d'enclenchement (46) qui peut être mis en prise par adhérence et/ou par concordance de forme avec un creux d'enclenchement (74) dans la partie de logement (70).

2. Entretoise selon la revendication 1, **caractérisée en ce que** le moyen d'enclenchement (46) peut être actionné contre une force de ressort.

3. Entretoise selon la revendication 1 ou 2, **caractérisée en ce que** le moyen d'enclenchement (46) est conçu sur une lame flexible (45).

4. Entretoise selon l'une des revendications 1 à 3, **caractérisée en ce que** le moyen d'enclenchement (46) et/ou la lame flexible (45) sont conçus d'un seul tenant avec la pièce rapportée (40).

5. Dispositif de coffre latéral pour une motocyclette, avec un coffre latéral (11) et avec une entretoise (10) selon au moins l'une des revendications 1 à 4.

6. Dispositif de coffre latéral selon la revendication 5, **caractérisé en ce que** le coffre latéral (11) comporte un logement (12) pour l'entretoise (10).

7. Dispositif de coffre latéral selon la revendication 5 ou 6, **caractérisé en ce que** le logement (12) loge l'élément de maintien (20) de l'entretoise (10).

8. Dispositif de coffre latéral selon l'une des revendications 5 à 7, **caractérisé en ce qu'**un dispositif de sécurité (13) est conçu entre le coffre latéral (11) et l'élément de maintien (20).

9. Dispositif de coffre latéral selon la revendication 8, **caractérisé en ce que** le dispositif de sécurité (13) est une ceinture de sécurité (14) séparable.
